# EUROPEAN PATENT SPECIFICATION

(11) **EP 0 309 503 B1**
(45) Date of publication and mention of the grant of the patent: **13.04.1994**
(21) Application number: 88902644.9
(22) Date of filing: 22.02.1988
(51) Int. Cl.: C08G 69/00

(54) **SPIRO(BIS)INDANE COPOLYAMIDES AND METHOD FOR THEIR PREPARATION**
COPOLYAMIDE, ENTHALTEND SPIRO(BIS)INDANE UND VERFAHREN ZU IHRER HERSTELLUNG
COPOLYAMIDES DE SPIRO(BIS)INDANE ET LEUR PROCEDE DE PREPARATION

(30) Priority: 27.02.1987 US 20264
(43) Date of publication of application: 05.04.1989
(73) Proprietor: GENERAL ELECTRIC COMPANY, Schenectady New York 12305 (US)
(72) Inventor: GUGGENHEIM, Thomas, Link, Scotia, NY 12302 (US); GUILES, Joseph, William, Ft. Collins, CO 80521 (US); MCCORMICK, Sharon, Joy, Schenectady, NY 12304 (US); COLLEY, Alice, Marie, Latham, NY 12110 (US)
(74) Representative: Pratt, Richard Wilson
(86) International application number: PCT/US88/00407
(87) International publication number: WO 88/06606

(56) References cited:
- EP-A- 192 480
- EP-A- 326 706
- FR-A- 2 137 599
- WPIL, File Supplier, AN=81-56285 D, Derwent Publications Ltd, (London, GB), "Photopolymerisable compsn. - contg. monomer with one acrylate substit. on benzene ring and polymeric binder, e.g. for photoresists"
- Enc. Polym. Sci. und Tech. vol. 10, 1969, pp. 496/498 und 580/583

## Description

This invention relates to spirobiindane copolyamides and a method for their preparation.

Polyamides are a valuable class of resinous materials useful in many areas including fiber formation, molding and formation of blends with other polymers. Particularly useful properties of polyamides are high tensile strength and solvent resistance. For the most part, polyamides are prepared either by the reaction of diamines with dicarboxylic acids or their derivatives or by ring-opening polymerization of lactams.

A recent innovation in the preparation of certain linear polymers involves the use of cyclic oligomer compositions as intermediates. For example, cyclic polycarbonate oligomer mixtures, disclosed in US-A-4,644,053, are readily convertible under very favorable conditions to linear polycarbonates of very high molecular weight. The present invention provides a class of novel copolyamides, and an analogous method for their preparation from cyclic polyamides.

FR-A-2,137,599 discloses linear polycondensates comprising units derived from a 1,1'-spirodi [indane] diol or a corresponding diamine, a dicarboxylic acid having at least four carbon atoms and a diol selected from aliphatic diols, aromatic diols and bisphenols. In the polymer, the 1,1'-spirodi [indane] units are linked to the remaining portions of the polymer through ester or amide linkages.

EP-A-192480 describes a class of bis(3-aminophenoxy) aromatics, including one derived from spirobiindane. It recommends the use of such monomers for the preparation of high temperature stable polymers. There is no further disclosure of what types of polymers are intended and of how they are prepared from the bis(3-aminophenoxy) aromatics.

Encyclopedia of Polymer Science and Technology, vol. 10, 1969 pp 496/498 and 580/583 discloses that block copolyamides could be made by melting aliphatic-aromatic polyamides with nylon 6 with shearing and heating at the required temperatures. There is no mention of polyamides including spirobiindane units.

In one of its aspects, the present invention includes linear spirobiindane copolyamides comprising structural units of the formula. 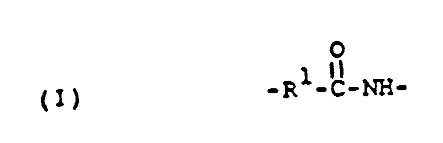
wherein R¹ is an unsubstituted or substituted alkylene radical containing a chain of 2-20 carbon atoms, and structural units of the formula 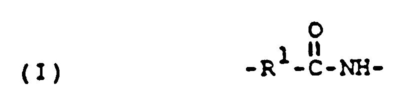
wherein R¹ is an unsubstituted or substituted alkylene radical containing a chain of 2-20 carbon atoms, and spiro(bis)indane amide units having the formula 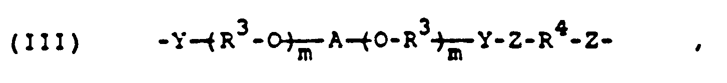
wherein:
A is 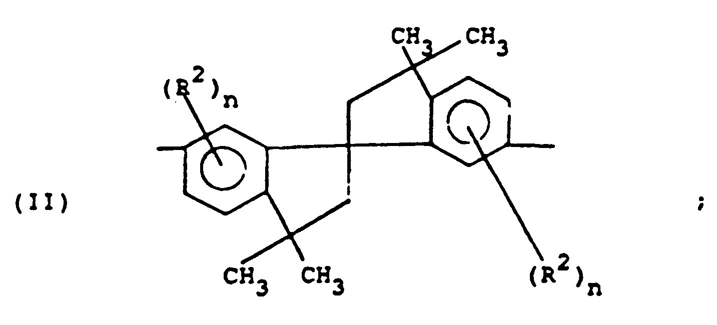
each R² is independently C₁₋₄ primary or secondary alkyl or halo;
each of R³ and R⁴ is independently an unsubstituted or substituted alkylene or arylene radical other than o-arylene;
Y is 〉C=O and Z is NH, or Y is NH and Z is 〉C=O;
m is 1; and
n is 0-3.

The R¹ radicals are preferably straight alkylene chains containing about 4-12 carbon atoms. They may be considered as being derived from lactams such as pivalolactam, δ-valerolactam, ε-caprolactam and laurolactam, in which R¹ is CH₂(CH₃)₂, (CH₂)₄, (CH₂)₅ and (CH₂)₁₁, respectively. ε-Caprolactam is especially preferred.

The A radical of the spirobiindane structural units has the formula 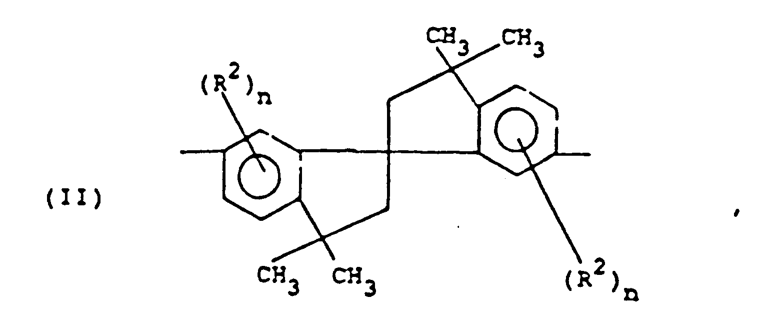
wherein each R² is independently C₁₋₄ primary or secondary alkyl or halo and n is 0-3. Such A radicals are obviously derived from 6,6'-difunctional 3,3,3',3'-tetramethylspiro(bis)indanes (hereinafter sometimes simply "spirobiindanes"), which may be substituted or unsubstituted. The R² values therein nay be alkyl radicals such as methyl, ethyl, 1-propyl or 2-propyl, or halo atoms such as chloro or bromo. Among compounds containing such R² values, methyl and chloro are preferred; however, the most preferred compounds are the unsubstituted 6,6'-difunctional 3,3,3',3'-tetramethylspiro(bis)indanes, in which n is 0.

The spirobiindane structural units have the formula 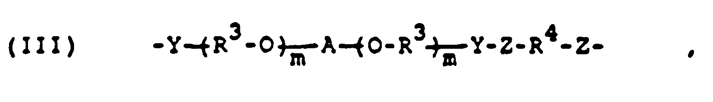
wherein:
A is as previously defined;
each of R³ and R⁴ is independently an unsubstituted or substituted alkylene or arylene radical other than o-arylene;
Y is 〉C=O and Z is NH, or Y is NH and Z is 〉C=O;
and
m is 1.

The R³ radicals may be alkylene or arylene and are most often unsubstituted m- or p-phenylene. The value of m may be 0 or 1; that is, the -O-R³- moiety may be present or absent.

The R⁴ values may also be alkylene or arylene. The alkylene radicals generally contain 2-8 carbon atoms, 2-4 thereof usually being in a straight chain. They are illustrated by ethylene, trimethylene and tetramethylene, as well as branched isomers thereof. The arylene radicals, which are frequently preferred, generally contain 6-25 carbon atoms and are illustrated by m-phenylene, p-phenylene, the corresponding tolylene radicals, 4,4'-biphenylene, 1,4-naphthylene, 1,8-naphthylene and phenylindanol-derived radicals of the formula 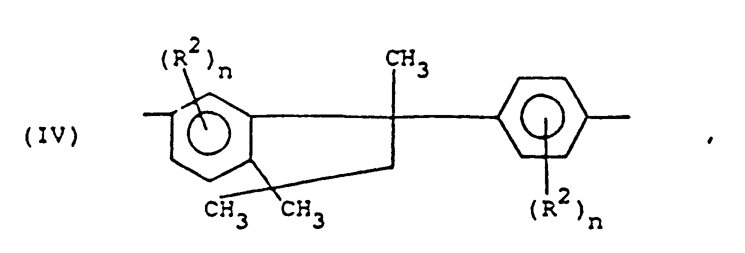
wherein R² and n are as previously defined. The arylene hydrocarbon radicals, especially m-phenylene, are most preferred.

Any substituent which does not undergo interfering reactions in the context of this invention may be present on the R³ and/or R⁴ radicals. Illustrative substituents are halo, nitro and alkoxy.

From the definitions hereinabove of Y and Z, it will be apparent that the preferred copolyamides of this invention may be derived from spirobiindane divines and other dicarboxylic acids, or from spirobiindane dicarboxylic acids and other diamines. They may be prepared by effecting reaction between at least one lactam of the formula 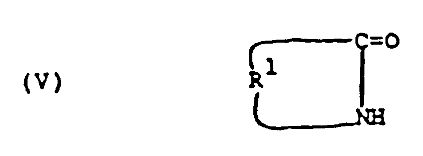
and a composition comprising macrocyclic polyamide oligomers of the formula 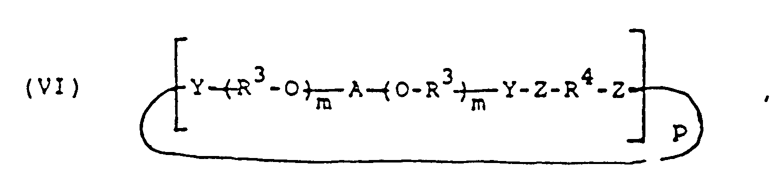
wherein R³⁻⁴, A and m are as previously defined and p is from 1 to 15, in the presence of a basic reagent. This method of preparation is another aspect of the invention.

For the most part, said macrocyclic polyamide oligomer compositions are mixtures of oligomers having varying degrees of polymerization. However, it is frequently possible to isolate individual oligomers, particularly the cyclic "monomer", by conventional means such as preparative scale high pressure liquid chromatography. Higher oligomer species are hereinafter sometimes identified as "dimer", etc.

Said oligomer compositions may be prepared from the corresponding diamines and dicarboxylic acid chlorides, as described hereinafter. The diamines in which R³ is m- or p-phenylene and p is 1, and corresponding nitro compounds are novel compounds; they are disclosed in US-A-4 800 754.

The nitro compounds (hereinafter sometimes "bis-nitrophenoxy ethers") may be prepared by the reaction of halonitrobenzenes or dinitrobenzenes with spirobiindane bisphenol salts under alkaline conditions in a dipolar aprotic solvent. The molar ratio of nitro compound to spirobiindane bisphenol salt is generally 2.0-2.5:1. The corresponding bis-aminophenoxy ethers may be prepared by reduction of said bis-nitrophenoxy ethers by conventional means such as catalytic hydrogenation. These methods of preparing the bis(m-nitrophenoxy) and bis(m-aminophenoxy) ethers are disclosed.

The preparation of the bis-nitrophenoxy and bis-aminophenoxy ethers is illustrated by the following examples.

### Example 1

A reaction vessel fitted with a mechanical stirrer, reflux condenser and nitrogen purge means was charged with 45.9 grams (149 mmol.) of SBI, 49.31 grams (313 mmol.) of p-chloronitrobenzene, 61.68 grams (447 mmol.) of potassium carbonate and 700 ml. of dry dimethylformamide. The mixture was purged with nitrogen and heated at 150°C with stirring for 14 hours. It was then poured into 1.5 liters of ice water with rapid stirring, and the precipitated 6,6'-bis(4-nitrophenoxy)-3,3,3',3'-tetramethyl-1,1'-spiro(bis)indane was recrystallized from methyl ethyl ketone. The yield was 73.7 grams (90% of theoretical) of a crystalline product, m.p. 200.5-201.5°C. The structure was confirmed by elemental analysis.

### Example 2

A mixture of 5.27 grams (9.58 mmol.) of the product of Example 1, 100 mg. of platinum oxide and 100 ml. of tetrahydrofuran was pressurized with hydrogen at 50 psi. and shaken for 3 hours at room temperature. The mixture was filtered, using a filter aid material, and the filtration residue was washed with methylene chloride. The combined filtrates were vacuum stripped to yield 4.6 grams (98% of theoretical) of 6,6'-(4-aminophenoxy)-3,3,3',3'-tetramethyl-1,1'-spiro(bis)indane, which was recrystallized from toluene to yield the pure product as fine crystals, m.p. 214-215°C. The structure was confirmed by elemental analysis.

### Example 3

In a reaction vessel similar to that of Example 1, a mixture of 24.51 grams (79.6 mmol.) of SBI, 27.40 grams (163.1 mmol.) of m-dinitrobenzene, 43.93 grams (318.4 mmol.) of potassium carbonate and 175 ml. of dimethyl sulfoxide was heated for 30 hours at 140°C, under nitrogen. The mixture was cooled and diluted with 500 ml. of methylene chloride, and was washed with 10% aqueous sodium hydroxide solution, water and aqueous sodium chloride solution. The organic phase was filtered and the filtration residue was rinsed with methylene chloride. The combined filtrates were vacuum stripped to yield 42.5 grams of the product as a thick oil. A portion of the oil was purified by medium pressure liquid chromatography of an ethyl acetate-hexane solution over silica gel. The purified 6,6'-(3-nitrophenoxy)-3,3,3',3'-tetramethyl-1,1'-spiro(bis)indane was obtained in 66% yield, m.p. 174-175°C. The structure was confirmed by elemental analysis.

### Example 4

Following the procedure of Example 2, 2.5 grams (4.5 mmol.) of the product of Example 3 was hydrogenated over a platinum oxide catalyst. Upon solvent removal and recrystallization from a toluene-cyclohexane mixture, there was obtained 1.8 grams (80% of theoretical) of analytically pure 6,6'-(3-aminophenoxy)-3,3,3',3'-tetramethyl-1,1'-spiro(bis)indane, m.p. 190-197°C with decomposition. The structure was confirmed by elemental analysis.

The macrocyclic polyamide oligomer compositions may be prepared by gradually adding the dicarboxylic acid chloride to a solution in a substantially inert organic liquid of the diamine, at a temperature effective to achieve reaction, said acid chloride and diamine being employed in a molar ratio in the range of 0.8-1.25:1.

Among the suitable intermediates for the polyamide oligomers are the 6,6'-diamino- and 6,6'-dicarboxy-3,3,3',3'-tetramethyl-bis-1,1'-spiroindanes. Said compounds are known in the art and may be prepared, for example, by oxidation of the corresponding 6,6'-dimethyl compounds to dicarboxylic acids followed, for diamine preparation, by treatment with sodium azide and sulfuric acid (i.e., the Schmidt reaction), as described in Curtis et al., J. Chem. Soc., 1962, 418-421.

Any organic liquid which is substantially inert to the diamines and acid chlorides employed may be used in the preparation of the oligomer compositions. In the case of aromatic diamines, suitable liquids include halogenated alkanes such as methylene chloride and chloroform; aprotic polar solvents such as dimethylformamide, dimethylacetamide and dimethyl sulfoxide; aromatic hydrocarbons and chlorinated aromatic hydrocarbons such as toluene, xylene and chlorobenzene; and ethers such as tetrahydrofuran and ethylene glycol dimethyl ether. In most instances, relatively volatile solvents such as methylene chloride, chloroform and tetrahydrofuran are preferred by reason of the ease of removal thereof by evaporation following completion of the reaction.

In this process of preparation, the acid chloride is gradually added to a solution of the diamine in the organic liquid. It is also most often added in the form of a solution in said liquid. The reagents are employed in molar ratios in the range of 0.8-1.25:1 and preferably 0.95-1.05:1.

In one embodiment of the invention, the diamine is initially present in the reaction vessel. Its concentration should then be up to 0.03 M to optimize the yield of cyclics. A second embodiment is to introduce both reagents simultaneously to said organic liquid, whereupon the diamine is ordinarily also added as a solution. .

It is sometimes advantageous to employ a hydrogen chloride acceptor in the reaction. Suitable hydrogen chloride acceptors are moderately strong bases ouch as alkali metal carbonates and tertiary amines, preferably sodium carbonate, triethylamine and pyridine. Said acceptor is generally present with the diamine, being either in the reaction vessel originally or introduced simultaneously with the acid chloride. The proportion thereof is preferably at least stoichiometric, most often about 1-3 equivalents per calculated equivalent of hydrogen chloride evolved.

Any reaction temperature effective to achieve reaction of the diamine with the dicarboxylic acid chloride may be employed. Elevated temperatures, such as in the range of 35-100°C, are usually satisfactory, with 40-80°C being preferred.

The above-described macrocyclic polyamide oligomer compositions may also contain linear oligomers and high polymer (i.e., linear polyamides having a degree of polymerization greater than 20). Any high polymer can typically be removed by conventional means such as flash chromatography on silica gel. When employing isophthaloyl dichloride and the bis-aminophenoxy ethers of this invention, cyclics yields of 90% or greater are typical.

The preparation of macrocyclic polyamide oligomer compositions is illustrated by the following examples.

### Example 5

A reaction vessel fitted with a septum cap, a reflux condenser and nitrogen purge means was charged with 5 ml. of chloroform which was brought to reflux in a nitrogen atmosphere. There were simultaneously added over ½ hour, via two syringes, a solution of 505.4 mg. (1.03 mmol.) of the diamine of Example 2 and 213 mg. (2.11 mmol.) of triethylamine in 5 ml. of dry tetrahydrofuran, and a solution of 209 mg. (1.03 mmol.) of isophthaloyl chloride in 5 ml. of dry chloroform. Refluxing was continued for 5 minutes, after which the mixture was diluted with 50 ml. of chloroform, washed with dilute aqueous hydrochloric acid solution and with sodium chloride solution, filtered through phase separation paper and vacuum stripped, yielding 520 mg. (80% of theoretical) of the desired cyclic polyamide oligomer mixture, m.p. 245-285°C. It was shown by high pressure liquid chromatography to contain macrocyclic oligomers with degrees of polymerization up to 15, with monomer to hexamer species being present in the approximate ratios 78:28:8:4:2:1. The presence of the monomer and dimer was confirmed by field desorption mass spectrometry.

The cyclic monomer species was isolated by preparative scale high pressure liquid chromatography. Its identity was also confirmed by field desorption mass spectrometry.

### Example 6

A reaction system similar to that of Example 5 was charged with 62 ml. of chloroform which was brought to reflux in a nitrogen atmosphere. There were simultaneously added over 40 minutes a solution of 1 gram (2.04 mmol.) of the diamine of Example 4 and 490 mg. (4.85 mmol.) of triethylamine in 10 ml. of dry tetrahydrofuran, and a solution of 500 mg. (3.46 mmol.) of isophthaloyl chloride in 10 ml. of dry chloroform. Refluxing was continued for 15 minutes, after which the mixture was diluted with methylene chloride, washed with dilute aqueous hydrochloric acid solution and vacuum stripped, yielding 1.33 grams of the desired microcyclic polyamide oligomer mixture. It was shown by high pressure liquid chromatography to contain monomer to heptamer species in the approximate ratios 18.9:5.6:1.2:1.6:1.3:0.9:1.

### Example 7

A solution of 1 gram (2 mmol.) of the diamine of Example 2 and 410 mg. (4 mmol.) of triethylamine in 36 ml. of dry tetrahydrofuran was heated to reflux and a solution of 410 mg. (2 mmol.) of isophthaloyl chloride in 5 ml. of chloroform was added over ½ hour. Upon workup as in Example 20, there was obtained a product shown by high pressure liquid chromatography to contain over 90% macrocyclic polyamide oligomers, with monomer to octamer species being present in the approximate ratios 18.4:7.9:4.5:2.9:2.0:1.6:1.2:1.

### Example 8

Following the procedure of Example 7, a solution of 2 mmol. of isophthaloyl chloride in 5 ml. of chloroform was added to a mixture of 2 mmol. of the diamine of Example 2, 650 mg. (6 mmol.) of sodium carbonate and 200 ml. of dry chloroform. Upon workup, there was obtained 1.2 grams of a tan solid containing about 90% macrocyclics, with monomer to hexamer species being present in the approximate ratios 11.0:3.6:2.3:1:4:1.2:1.

### Example 9

Following the procedure of Example 7, a solution of 2 mmol. of isophthaloyl chloride in 5 ml. of chloroform was added to a solution of 2 mmol. of the diamine of Example 2 in 77 ml. of dry chloroform, in the absence of hydrogen chloride acceptors. There was obtained 900 mg. of a yellow solid containing 90% macrocyclics, with monomer to hexamer species being present in the approximate ratios 16.2:3.1:1.7:1.0:1.1:1.

### Examples 10-11

The procedure of Example 7 was repeated substituting 4,4'-biphenyldicarboxylic acid chloride and 1,1,3-trimethyl-3-phenylindane-4',6-dicarboxylic acid chloride, respectively, for isophthaloyl chloride on an equimolar basis. The products were shown to contain the following approximate ratios of molecular species:
Example 10 - monomer to decamer,
7.4:7.3:4.4:3.1:2.3:2.1:1.6:1.4:1.2:1.
Example 11 - monomer to heptamer,
4.4:5.2:11.3:6.3:3.3:1.7:1.

### Example 12

To a reaction vessel containing 12 ml. of dry methylene chloride at reflux temperature were added over ½ hour under nitrogen, with stirring, a solution of 200 mg. (0.65 mmol.) of 6,6'-diamino-3,3,3',3'-tetramethyl-1,1'-spiroindane and 132 mg. (1.3 mmol.) of triethylamine in 4 ml. of methylene chloride, and a solution of 133 mg. (0.65 mmol.) of isophthaloyl chloride in 4 ml. of methylene chloride. The mixture was cooled to room temperature, diluted with 50 ml. of methylene chloride, washed twice with dilute aqueous hydrochloric acid solution and once with aqueous sodium chloride solution, dried over magnesium sulfate and vacuum stripped. There was obtained 270 mg. of a white solid which was shown by high pressure liquid chromatography and field desorption mass spectroscopy to contain approximately 50% macrocyclic polyamide oligomers, with the balance being linear oligomers and high polymer.

### Example 13

A reaction vessel fitted with a septum cap, a magnetic stirrer, a reflux condenser and nitrogen purge means was charged with a solution of 840 mg. (1.71 mmol.) of the diamine of Example 2 and 270 mg. (3.42 mmol.) of pyridine in 20 ml. of chloroform which was brought to reflux in a nitrogen atmosphere. There was added over one hour, via a syringe, a solution of 1 gram (1.71 mmol.) of the diacid chloride of 6,6'-dicarboxy-3,3,3',3'-tetramethyl-1,1'-spiro(bis)indane in 14 ml. of dry chloroform. Refluxing was continued for 15 minutes, after which the mixture was diluted with 100 ml. of chloroform, washed with dilute aqueous hydrochloric acid solution and with sodium chloride solution, dried over magnesium sulfate, filtered and vacuum stripped, yielding 850 mg. of the desired macrocyclic polyamide oligomer mixture.

### Examples 14-16

Following the procedure of Example 6, various diamines were reacted with equimolar proportions of the diacid chloride of 6,6'-dicarboxy-3,3,3',3'-tetramethyl-1,1'-spiro(bis)indane. After washing, the organic phases were dried over magnesium sulfate, filtered and vacuum stripped. The products were shown by high pressure liquid chromatography and field desorption mass spectrometry to comprise macrocyclic amide oligomers having degrees of polymerization from 1 to 3. The diamines employed were:
Example 14 - m-phenylenediamine;
Example 15 - 4-aminophenyl ether;
Example 16 - 2,2-bis(4-aminophenyl)propane.

### Example 17

To a solution of 1 gram (2.04 mmol.) of trimellitic anhydride acid chloride and 15 mg. of sodium pyrophosphate in 2 ml. of o-dichlorobenzene was added slowly at 100°C, with stirring, a solution of 430 mg. (2.04 mmol.) of the diamine of Example 2 in 1 ml. of o-dichlorobenzene. The mixture was heated at 180°C for 1 hour and 5 ml. of o-dichlorobenzene was added. Water and solvent were removed by distillation to a total of 5 ml., after which o-dichlorobenzene addition and distillation were repeated. The solution was cooled and poured into 50 ml. of rapidly stirred methanol. The solids which precipitated were filtered to yield 1.2 grams (91% of theoretical) of a material which was shown by high pressure liquid chromatography and field desorption mass spectrometry to comprise principally the macrocyclic polyamideimide dimer.

The basic reagents which may be employed in the method of this invention include inorganic bases such as the alkali and alkaline earth metals and their hydrides, hydroxides, carbonates and alkoxides, and strong organic bases such as tetraalkylammonium hydroxides, guanidines, and organometallics including Grignard reagents and organolithium reagents. The alkali metal hydrides, especially sodium hydride, are preferred.

The reaction between the lactam, basic reagent and macrocyclic polyamide oligomer composition typically takes place at elevated temperatures. In general, temperatures in the range of 25-200°C, preferably 90-150°C, are adequate to effect reaction of the lactam with the basic reagent to form an anionic intermediate, which subsequently reacts with the oligomer composition at temperatures in the range of 200-300°C. The proportions of lactam and oligomer composition are not critical but may be varied according to the desired stoichiometry of the product.

The preparation of the linear copolyamides of this invention is illustrated by the following examples.

### Example 18

A mixture of 7.5 grams of a macrocyclic polyamide oligomer mixture similar to that of Example 5, 7.5 grams of caprolactam and 237 mg. (15 mole percent based on caprolactam) of sodium hydride was heated in a test tube at 140°C in a nitrogen atmosphere for 1 hour, during which time melting occurred and hydrogen was evolved. It was then heated for 10 minutes at 265°C and cooled. The solid product was removed by breaking the test tube and a portion thereof was dissolved in chloroform and treated with trifluoroacetic anhydride, whereupon the polymer dissolved. Gel permeation chromatographic analysis of the solution showed the presence of a copolyamide having a number average molecular weight of 22,000 and a weight average molecular weight of 47,000.

## Claims

1. A linear spirobiindane copolyamide comprising structural units of the formula 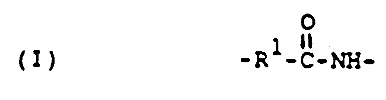 wherein R¹ is an unsubstituted or substituted alkylene radical containing a chain of 2-20 carbon atoms, and spiro(bis)indane amide units having the formula 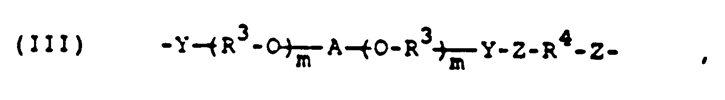 wherein:
A is 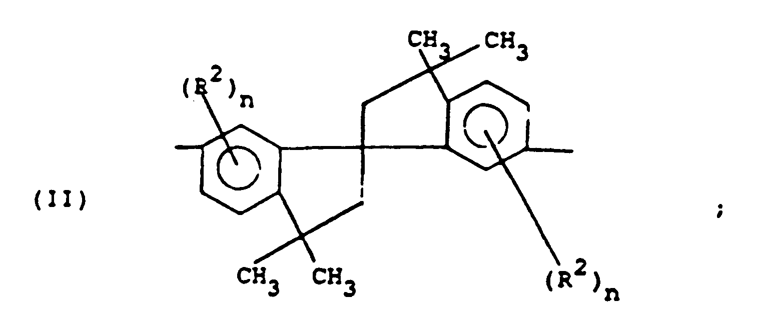 each R² is independently C₁₋₄ primary or secondary alkyl or halo;
each of R³ and R⁴ is independently an unsubstituted or substituted alkylene or arylene radical other than o-arylene;
Y is 〉C=O and Z is NH, or Y is NH and Z is 〉C=O;
m is 1; and
n is 0-3.

2. A copolyamide according to claim 1 wherein n is 0.

3. A copolyamide according to claim 2 wherein Y is NH; Z is 〉C=0; and R⁴ is A, m-phenylene, 4,4'-biphenylene or

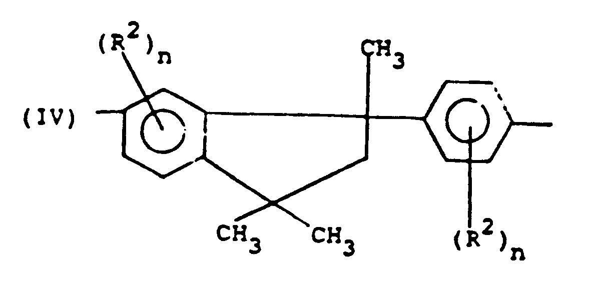

4. A copolyamide according to claim 3 wherein R³ is m- or p-phenylene.

5. A copolyamide according to claim 4 wherein R⁴ is m-phenylene.

6. A copolyamide according to claim 5 wherein R¹ is (CH₂)₅.

7. A method for preparing a copolyamide according to claim 1 which comprises effecting reaction between at least one lactam of the formula 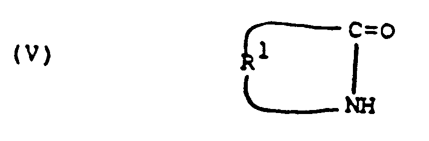 and a composition comprising macrocyclic polyamide oligomers in the presence of a basic reagent, said polyamide oligomers having the formula 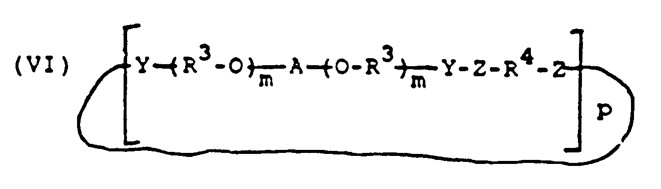 wherein p is from 1 to 15.

8. A method according to claim 7 wherein the basic reagent is an alkali metal hydride.

9. A method according to claim 8 wherein the reaction temperature is in the range of 90-300°C.

10. A method according to claim 8 wherein R¹ is (CH₂)₅.

11. A method according to claim 10 wherein Y is NH, Z is 〉C=0, R³ is m- or p-phenylene, R⁴ is m-phenylene and m is 1.

## Patentansprüche

1. Lineares Spirobisindancopolyamid enthaltend die Struktureinheiten der Formel 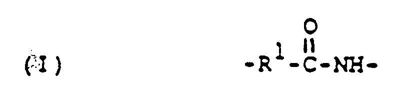 worin R¹ ein unsubstituierter oder substituierter Alkylenrest ist, der eine Kette aus 2 bis 20 Kohlenstoffatomen enthält und Spiro(bis)-Indanamideinheiten mit der Formel 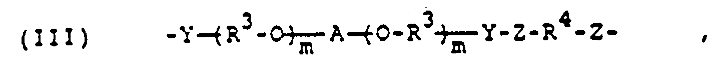 worin A gleich 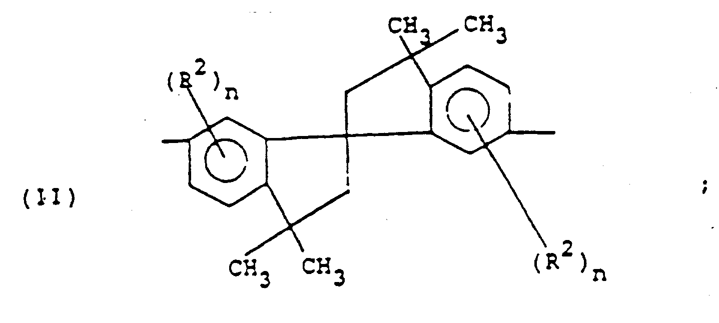 ist, jedes R² unabhängig C₁₋₄ primäres oder sekundäres Alkyl oder Halogen darstellt;
jedes R³ und R⁴ unabhängig ein unsubstituierter oder substituierter Alkylen- oder Arylenrest ist, der von dem anderen Arylen verschieden ist; y gleich 〉C=O ist und Z NH darstellt, oder Y NH und Z 〉CO ist,
m gleich 1 und
n 0-3 ist.

2. Copolyamid nach Anspruch 1, worin n gleich 0 ist.

3. Copolyamid nach Anspruch 2, worin Y gleich NH, Z gleich 〉CO, R⁴ gleich A, m-Phenylen, 4,4'-Bisphenylen oder 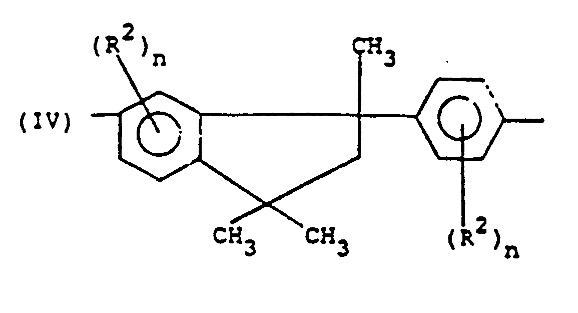 ist.

4. Copolyamid nach Anspruch 3, worin R³ m- oder p-Phenylen ist.

5. Copolyamid nach Anspruch 4, worin R⁴ m-Phenylen ist.

6. Copolyamid nach Anspruch 5, worin R¹ (CH₂)₅ ist.

7. Verfahren zur Herstellung eines Polyamids nach Anspruch 1, welches die Reaktion zwischen wenigstens einem Laktam der Formel 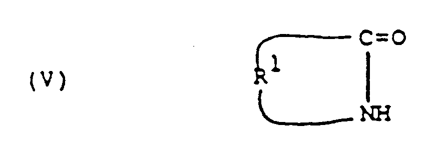 und einer Zusammensetzung in Anwesenheit eines basischen Reagenzes umfaßt, welche makrozyklische Polyamidoligomere enthält, wobei diese Polyamidoligomeren die Formel 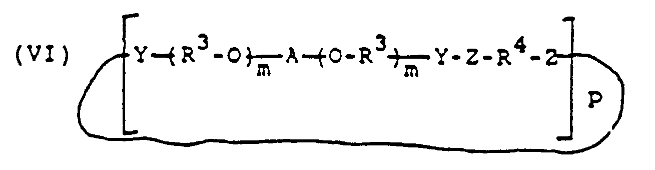 aufweisen, worin p von 1 bis 15 beträgt.

8. Verfahren nach Anspruch 7, worin das basische Reagenz ein Alkalimetallhydrid ist.

9. Verfahren nach Anspruch 8, worin die Reaktionstemperatur im Bereich von 90 bis 300°C liegt.

10. Verfahren nach Anspruch 8, worin R¹ gleich (CH₂)₅ ist.

11. Verfahren nach Anspruch 10, worin Y NH, Z 〉CO darstellt, R³ m- oder p-Phenylen ist, R⁴ m-Phenylen darstellt und m gleich 1 ist.

## Revendications

1. Une copolyamide spirobiindane linaire comprenant des motifs de formule: 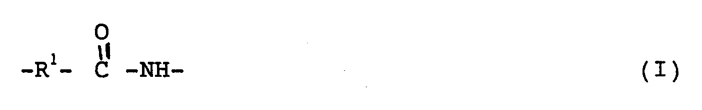 dans laquelle:
R₁ désigne un radical alkylène non substitué ou substitué, contenant une chaîne ayant de 2 à 20 atomes de carbone, et des motifs spiro-(bis)endane-amide ayant la formule: 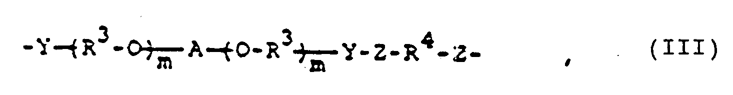
dans laquelle:
A désigne: 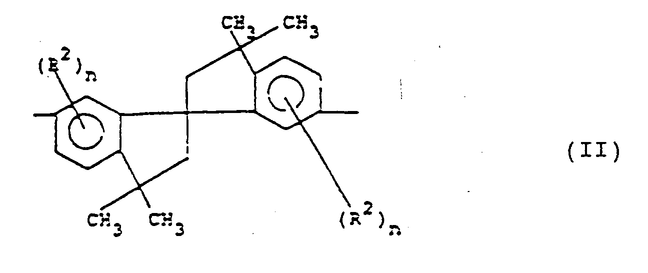
où:
chaque R₂ désigne, indépendamment des autres, un radical alkyle primaire ou secondaire en C₁ à C₄ ou un halogène;
chaque R₃ et R₄ désigne, indépendamment des autres, un radical alkylène non substitué ou substitué autre que o-arylène;
Y représente :
〉C = O
et
Z représente NH, ou bien Y représente NH et Z représente :
〉C = O ;
m désigne le nombre 1, et
n désigne un nombre de 0 à 3.

2. Copolyamide selon la revendication 1, dans laquelle n désigne 0.

3. Copolyamide selon la revendication 1, dans laquelle :
Y désigne NH;
Z désigne 〉C=O; et
R₄ désigne A, m-phénylène, 4,4'-biphénylène, ou

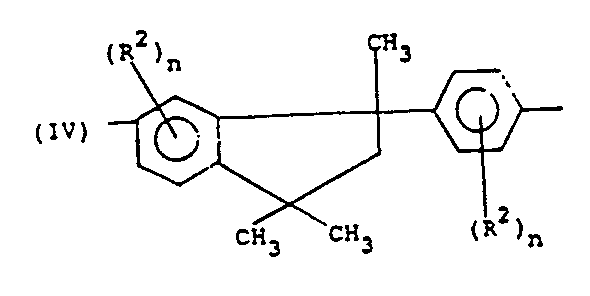

4. Copolyamide selon la revendication 3, dans laquelle R₃ désigne m- ou p-phénylène.

5. Copolyamide selon la revendication 4, dans laquelle R₄ désigne m-phénylène.

6. Copolyamide selon la revendication 5, dans laquelle R₁ désigne (CH₂)₅.

7. Procédé de préparation d'un copolyamide selon la revendication 1, comprenant la réaction entre au moins une lactame de formule: 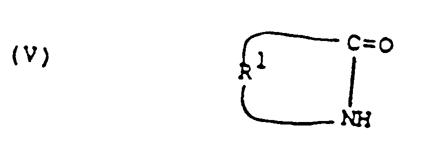 et une composition comprenant des oligomères polyamide macrocycliques, en présence d'un réactif basique, lesdits oligomères polyamides ayant la formule: 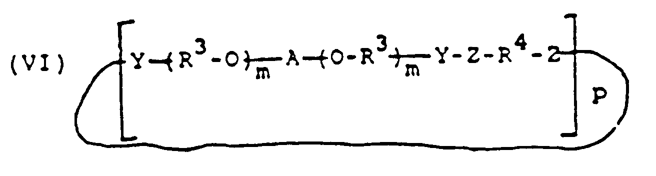 dans laquelle p désigne un nombre de 1 à 15.

8. Procédé selon la revendication 7, dans lequel le réactif basique est un hydrure de métal alcalin.

9. Procédé selon la revendication 8, dans lequel la température de la réaction se trouve dans l'intervalle allant de 90 à 300°C.

10. Procédé selon la revendication 8, dans lequel R¹ désigne (CH₂)₅.

11. Procédé selon la revendication 10, dans lequel :
Y désigne NH,
Z désigne 〉C=O,
R³ désigne un radical m- ou p-phénylène,
R⁴ désigne m-phénylène, et.
m désigne le nombre 1.
